Europäisches Patentamt

European Patent Office

Office européen des brevets

(11) Publication number: **0 138 081**
**B1**

(12) # EUROPEAN PATENT SPECIFICATION

(45) Date of publication of patent specification: **16.12.87**

(51) Int. Cl.⁴: **F 16 D 65/04**

(21) Application number: **84111065.3**

(22) Date of filing: **17.09.84**

(54) **Brake pad and shim assembly for disc brake.**

(30) Priority: **29.09.83 JP 152285/83 u**

(43) Date of publication of application:
**24.04.85 Bulletin 85/17**

(45) Publication of the grant of the patent:
**16.12.87 Bulletin 87/51**

(84) Designated Contracting States:
**DE FR GB**

(56) References cited:
**DE-A-2 821 194**
**DE-A-3 007 009**
**GB-A-1 592 817**
**GB-A-2 001 719**
**GB-A-2 022 733**
**JP-U-53 017 427**

(73) Proprietor: **SUMITOMO ELECTRIC INDUSTRIES
LIMITED**
**No. 15, Kitahama 5-chome Higashi-ku
Osaka-shi Osaka 541 (JP)**

(72) Inventor: **Yamamoto, Masachika c/o Itami
Works**
**Sumitomo Electric Industries, Ltd.
1-1, Koyakita 1-chome Itami-shi Hyogo (JP)**

(74) Representative: **Glawe, Delfs, Moll & Partner
Patentanwälte
Postfach 26 01 62 Liebherrstrasse 20
D-8000 München 26 (DE)**

Courier Press, Leamington Spa, England.

## Description

The present invention relates to a brake pad and shim assembly for a disc brake, said assembly comprising: A brake pad having a backing plate, an inner shim and an outer shim made of a metal, having a shape approximate to the shape of said backing plate, and mounted on said backing plate.

In order to prevent squeal produced when a floating type disc brake is applied, it is known to mount two shims made from metal plates on the backing plate of a brake pad with one shim placed upon the other.

A shim assembly is known from the Japanese utility model publication 53—17427 where the two shims are about the same in shape as the backing plate and mounted to the backing plate by mounting rods so that the inner shim is substantially restricted in movement.

In accordance with the present invention, the inner shim is floating or shiftable in each braking in any direction in a space between the backing plate of a brake pad and the outer shim. This assures that the brake piston abuts the outer shim not at a fixed point but at different points. The shiftability of the inner shim helps to sustain the antisqueal effect.

In accordance with the present invention, a lubricant such as grease is applied to both sides of the inner shim for smoother movement of the inner shim and the inner shim is formed with a slit to hold the lubricant.

Other objects and features of the present invention will become apparent from the following description taken with reference to the accompanying drawings, in which:

Fig. 1 is an exploded perspective view of the first embodiment of the present invention;

Fig. 2 is a rear view of the first embodiment in an assembled state;

Fig. 3 is a sectional side view thereof; and

Fig. 4 is a view similar to Fig. 2 of the second embodiment.

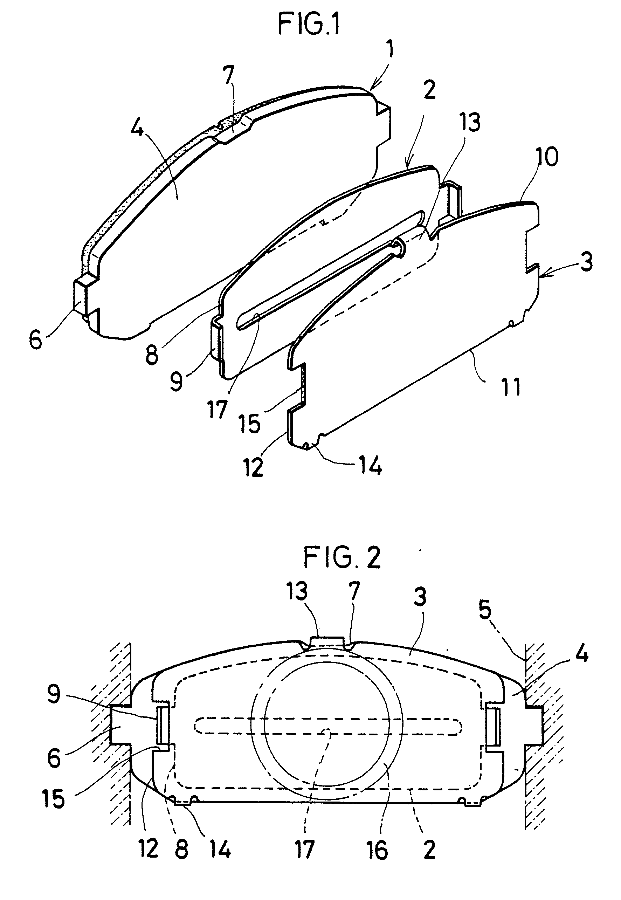

Figs. 1 to 3 show the first embodiment of the present invention. The assembly comprises a brake pad 1, an inner shim 2, and an outer shim 3. A backing plate 4 of the brake pad 1 is provided with a projection 6 at each end so as to engage a torque member 5, and with a recess 7 in the center of its upper edge so as for the outer shim 3 to engage the backing plate.

The inner shim 2 is made of stainless steel or copper and approximates in shape to the backing plate 4 except for the projections 6 and the recess 7. As shown in Fig. 2, the size of the inner shim 2 is such that with the center of the inner shim 2 superposed on that of the backing plate 4, a gap of several millimeters is left between the peripheral edge of the backing plate 4 and that of the inner shim. (The gap is larger at the ends than at the upper and lower edges.) The inner shim 2 is provided at its ends with claws 9 which are bent toward the outer shim 3.

The outer shim 3 is made of a metal plate of the same material as the inner shim 2. The size of the outer shim 3 is such that the upper edge 10 and the lower edge 11 fall on the corresponding edges of the backing plate 4 while a gap of several millimeters is left between both ends 12 of the outer shim and those of the backing plate 4.

The outer shim is provided with an elastic claw 13 in the center of its upper edge 10 to engage in the recess 7 of the backing plate 4, and is further provided with claws 14 on the lower edge 11 to engage the backing plate 4. Recesses 15 are formed in both end edges 12 in such dimensions as to allow the claws 9 of the inner shim 2 to move in any direction within a limit of several millimeters.

Since the outer shim 3 engages the backing plate 4 through its claws 13 and 14, the inner shim 2 can freely move in any direction along the surface of the backing plate 4 within the limit of spaces given by its claws 9 in the recesses 15.

A brake piston is pressed against the outer shim at a position designated by the numeral 16 in Fig. 2.

The inner shim is provided with a slit 17 to hold a lubricant applied to both sides of the inner shim 2 for smoother movement of the inner shim. The slit 17 may be formed in the longitudinal direction in the inner shim 2 as shown in the drawings or, in the alternative, perpendicularly thereto or obliquely. A plurality of slits may be provided.

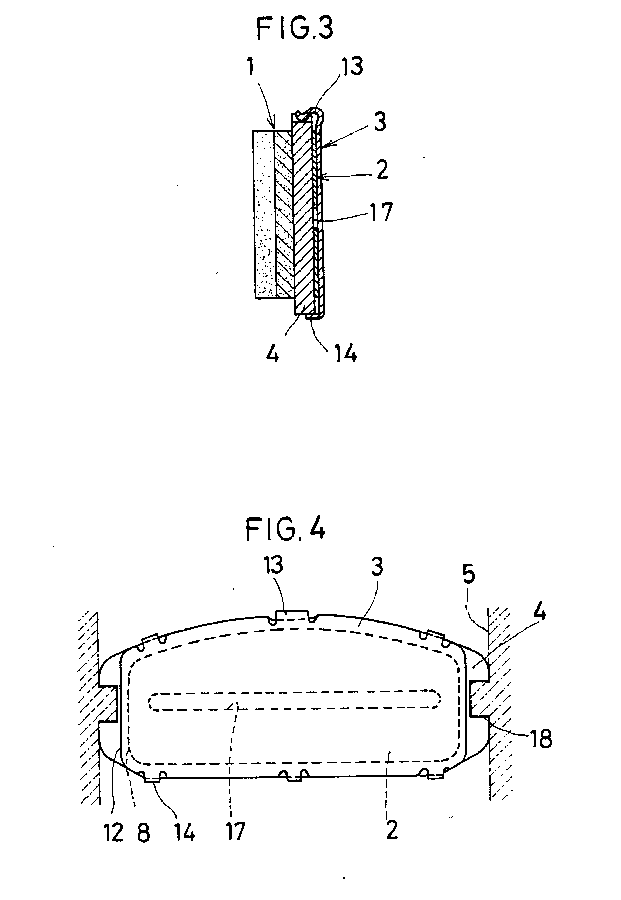

The second embodiment shown in Fig. 3 is substantially the same as the first embodiment except that the backing plate 4 is provided with recesses 18 at both ends to receive projections provided on the torque member 5 and that no means for engaging the inner shim 2 with the outer shim 3 is provided. In this embodiment, the movement of the inner shim 2 in the radial direction of the rotor is restricted by the claws 13 and 14 on the outer shim 3, while its movement in the direction of rotation of the rotor is restricted by the torque member 5.

In either of the embodiments, the outer shim 3 may or may not engage the backing plate 4 so as to be movable to some extent relative thereto in the direction of rotation of the rotor.

The outer shim 3 may be different in thickness from the inner shim 2. For example, the outer shim with a thickness of 0.3 mm may be combined with the inner shim with a thickness of 0.4 mm.

If the assembly of the above-described structure is used as an inner pad, each time a brake is applied, the inner shim 2 changes its position due to the vibration or deflection of the brake pad, or due to the shifting of the brake pad relative to the brake piston in the direction of rotation of the rotor. Thus the conditions of the shims against which the brake piston is pressed are variable.

The assembly of a brake pad and shims in accordance with the present invention can be used not only as an inner pad but also as an outer pad.

As mentioned above, the inner shim is adapted to move or float and provided with a slit to be filled with a lubricant such as grease so that the shiftability of the inner shim and thus the antisqueal effect may be maintained over a prolonged period of time.

## Claims

1. A brake pad shim assembly for a disc brake, said assembly comprising:

a brake pad having a backing plate, an inner shim and an outer shim made of a metal, having a shape approximate to the shape of said backing plate, and mounted on said backing plate,

characterized in that said inner shim (2) being a slightly smaller size than said backing plate (4) and being disposed in a space between said backing plate (4) and said outer shim (3), said outer shim (3) adapted to engage said backing plate (4), and said inner shim (2) being shiftable within some limit in any direction in said space and being formed with a slit (17) to hold a lubricant.

2. A brake pad and shim assembly as claimed in claim 1, characterized in that said inner shim (2) is formed with a claw (9) at each end thereof and said outer shim (3) is formed with a recess (15) at each end thereof to loosely receive said claw (9) on said inner shim (2).

## Patentansprüche

1. Bremsklotz und -klemmstückanordnung für eine Scheibenbremse mit:

einem Bremsklotz mit einer Trägerplatte, einer inneren Klemmscheibe und einer äußeren Klemmscheibe aus Metall, die eine Form haben, die ungefähr der Form der Trägerplatte entspricht, und auf der Trägerplatte befestigt sind,

dadurch gekennzeichnet, daß die innere Klemmscheibe (2) eine etwas geringere Größe als die Trägerplatte (4) hat und in einem Freiraum zwischen der Trägerplatte (4) und der äußeren Klemmscheibe (3) angeordnet ist, daß die äußere Klemmscheibe (3) im Eingriff mit der Trägerplatte (4) steht, und daß die innere Klemmscheibe (2) innerhalb gewisser Grenzen in jede Richtung in diesem Freiraum schiebbar ist und mit einem Schlitze (17) ausgeformt ist, welcher Schmiermittel enthält.

2. Bremsklotz und -klemmstückanordnung nach Anspruch 1, dadurch gekennzeichnet, daß die innere Klemmscheibe (2) eine Klaue (9) aufweist an jedem ihrer Enden und daß die äußere Klemmscheibe (3) mit einer Ausnehmung (15) an jedem ihrer Enden versehen ist, um die Klaue (9) auf der inneren Klemmscheibe (2) locker aufzunehmen.

## Revendications

1. Assemblage de plaquette de frein et de cales pour un frein à disque, ledit assemblage comprenant: une plaquette de frein munie d'une plaque support, une cale intérieure et une cale extérieure métalliques, d'une forme voisine de la forme de ladite plaque support et montées sur cette plaque support, caractérisé en ce que ladite cale intérieure (2) est légèrement plus petite que ladite plaque support (4) et est disposée dans un espace défini entre ladite plaque support (4) et ladite cale extérieure (3), ladite cale extérieure (3) étant adaptée à s'accoupler avec ladite plaque support (4), et ladite cale intérieure (2) pouvant se déplacer dans certaines limites en toute direction dans ledit espace et comportant une fente (17) pour contenir un lubrifiant.

2. Assemblage de plaquette de frein et de cales suivant la revendication 1, caractérisé en ce que ladite cale intérieure (2) comporte une griffe (9) à chacune de ses extrémités, et ladite cale extérieure (3) comporte une découpe (15) à chacune de ses extrémités pour recevoir avec jeu ladite griffe (9) de la cale intérieure (2).

0 138 081

FIG.1

FIG. 2

1

## FIG.3

## FIG.4